# DEMANDE DE BREVET EUROPEEN

(11) **EP 0 780 049 A1**
(43) Date de publication de la demande: **25.06.1997**
(21) Numéro de dépôt: 96402826.0
(22) Date de dépôt: 19.12.1996
(51) Int. Cl.: A01D 25/04, A01D 25/00

(54) **Appareil d'arrachage d'objets tels que betteraves**

(30) Priorité: 21.12.1995 FR 9515279
(71) Demandeur: ETABLISSEMENTS JEAN MOREAU, 59159 Marcoing (FR)
(72) Inventeur: Jette, Etienne, 59159 Marcoing (FR)
(74) Mandataire: Colas, Jean-Pierre

(57) **Abrégé**

L'appareil comprend une paire de socs vibrants (5), qui créent dans la terre une bande désagrégée, qui contient les objets à arracher (22). Des doigts flexibles (15) sont portés par des roues (13) faisant un angle faible par rapport à un plan vertical de symétrie à peu près parallèle à la direction de déplacement, et un angle analogue avec la verticale. Ces doigts (15) pénètrent dans la bande désagrégée en se rapprochant les uns des autres, et serrent entre eux les objets à arracher. Ils élèvent ces objets, puis les abandonnent en s'écartant. Les objets sont alors repris par des moyens de transfert (20).

## Description

La présente invention est relative à un appareil d'arrachage d'objets tels que betteraves ou similaires, destiné à être monté sur un véhicule capable de se déplacer sur le sol.

De nombreux appareils d'arrachage de betteraves, et aussi de pommes de terre ou autres objets, ont été proposés depuis de longues années. Selon une technique répandue, ces appareils comprennent essentiellement une paire de socs, généralement disposés symétriquement par rapport à un plan de symétrie vertical parallèle au sens du mouvement, destinés à désagréger la terre, et surtout à soulever les betteraves au-dessus du sol, afin de les faire retomber sur un disque de ramassage rotatif, disposé de façon à être légèrement incliné vers l'avant, le bord avant de ce disque pénétrant légèrement dans la terre ou se trouvant à faible hauteur au-dessus d'elle, et étant situé à faible distance derrière les socs, afin de recevoir les betteraves soulevées par ceux-ci. Ces disques, ou "soleils", comportent un moyeu de diamètre relativement faible, qui porte des dents de direction générale radiale. Ces soleils reçoivent les betteraves à leur partie avant, les transfèrent, en les débarrassant d'une partie de leur terre vers l'arrière, où ils tombent sur d'autres disques de transfert, qui, outre leur fonction de complément de nettoyage, les acheminent soit vers un andain posé sur le sol, soit vers une trémie ou une benne de ramassage.

Des résultats intéressants ont été obtenus en remplaçant les socs par des disques rotatifs, tournant dans des plans à peu près verticaux, et situés à peu près au même endroit que les socs.

Il a également été proposé d'améliorer l'efficacité des socs en les animant d'un mouvement vibratoire, qui a pour effet de désagréger le sol, en particulier dans la zone comprise entre les deux socs d'une même paire.

Dans le document DE-A-2.332.693, on a décrit un dispositif d'arrachage de betteraves comprenant d'une part des socs disposés par paire, et oscillant dans une direction voisine de la verticale. Au-dessus des socs sont disposées des "roues preneuses" portant, de façon souple, des organes preneurs qui coopèrent avec des barreaux solidaires des socs pour soulever les betteraves dégagées par ces socs, afin de les amener à des moyens de transfert. Ces roues preneuses tournent dans des plans parallèles au plan de symétrie verticale de l'appareil.

On aurait pu s'attendre à ce que cet appareil diminue les casses des betteraves, du fait que les roues preneuses entraînent les betteraves en leur imprimant un mouvement sensiblement vertical vers le haut, sans leur imprimer une flexion. Cependant, ce dispositif s'est peu développé. Il semblerait que la cause de cette moindre diffusion soit le fait que les betteraves subissaient des casses résultant de chocs lorsqu'elles viennent en contact avec les roues preneuses, ou au moment où elles viennent de les quitter.

La présente invention a pour but de remédier à ces inconvénients, et à fournir par conséquent un dispositif d'arrachage de betteraves qui permette des performances accrues, tant en réduction du nombre de casses qu'en diminution de la quantité de terre entraînée.

Pour obtenir ce résultat, l'invention fournit un appareil d'arrachage d'objets tels que betteraves ou similaires, destiné à être monté sur un véhicule capable de se déplacer sur le sol,
cet appareil comprenant :
   - une paire de socs conçus pour s'enfoncer dans le sol au-dessous du niveau de la partie inférieure des objets à arracher, disposés symétriquement par rapport à un plan de symétrie vertical parallèle à la direction de déplacement du véhicule, les socs étant formés chacun d'une lame rigide, convergeant l'un vers l'autre à leur partie inférieure,
   - des moyens pour animer les socs d'un mouvement vibratoire en même temps que le véhicule se déplace, de façon à créer entre eux une bande de terre désagrégée et contenant les objets à arracher,
   - et des moyens pour soulever les objets à arracher contenus dans la bande de terre désagrégée et pour les transférer sur des moyens de nettoyage et d'acheminement vers un andain ou vers une trémie, ces moyens comprenant des roues tournant dans un plan à peu près vertical et parallèle au plan de symétrie de l'appareil,
la particularité principale de cet appareil étant que les moyens pour soulever les objets à arracher comprennent une paire de roues formées chacune d'un moyeu central et de doigts, montés sur le moyeu et s'étendant radialement vers l'extérieur à partir du moyeu dans un plan moyen perpendiculaire à l'axe de la roue, ces doigts étant flexibles élastiquement dans une direction perpendiculaire audit plan moyen,
les roues de la paire étant disposées symétriquement par rapport à un plan de symétrie vertical dont la position moyenne est confondue avec celle du plan de symétrie de la paire de socs,
les plans moyens des doigts de chaque roue étant disposés obliquement par rapport au plan de symétrie de la paire de roues, et par rapport à la verticale, de telle façon que les périphéries des deux roues de la paire présentent un point d'écartement minimal situé vers le bas et vers l'arrière dans le sens de déplacement du véhicule, par rapport aux centres des roues,
l'écartement minimal entre les périphéries des roues étant tel qu'au point d'écartement minimal les objets à arracher peuvent être maintenus élastiquement entre les doigts flexibles sans être endommagés,
l'écartement maximal entre les périphéries des roues étant tel que les objets à arracher ne peuvent pas être maintenus par les doigts flexibles,
l'écartement entre les points les plus bas des périphéries des roues présentant un écartement juste suffisant pour permettre le maintien élastique des objets à arracher, ou d'une partie importante de ces objets, entre les doigts flexibles,
la position en hauteur des roues étant calculée pour que leur partie inférieure pénètre dans la bande de terre désagrégée par les socs jusqu'à une profondeur suffisante pour permettre aux doigts flexibles de saisir les objets à arracher,
et les roues étant entraînées en rotation, lors du déplacement du véhicule, de telle façon que la partie inférieure de la périphérie des roues est à peu près immobile, dans la direction du déplacement du véhicule, par rapport au sol.

Une des différences principales entre l'invention et le document précité réside dans le fait que les betteraves ne sont plus extraites de terre en étant poussées par des organes plus ou moins rigides, mais par serrage entre des doigts flexibles, qui se rapprochent l'une de l'autre pour les soulever, et qui ensuite, au cours du déplacement, s'écartent pour laisser retomber ces betteraves sur les moyens de transfert.

Dans la pratique, on peut prévoir que les plans moyens des doigts font avec la verticale un angle de 5 à 20 degrés, et, avec le plan de symétrie de la paire de roues, un angle de 5 à 20 degrés.

De préférence, les deux roues à doigts flexibles sont portées par un équipage qui assure le maintien de leur position relative mais permet de légers déplacements de l'ensemble de ces deux roues dans une direction verticale et dans une direction horizontale.

Avantageusement, dans ce cas, l'équipage portant les deux roues à doigts flexibles est constitué comme une fourche reliée au véhicule par une liaison articulée placée en avant desdites roues dans le sens du déplacement.

La raison d'être de cette disposition préférée est la suivante : les limites de la bande de terre désagrégée, mais restée sensiblement en place, qui n'oppose qu'une faible résistance au départ des objets, ne sont pas régulières, et varient notamment en fonction de la présence de la taille et de la position des objets à arracher. La disposition préférée a pour résultat que les roues à doigts flexibles progressent automatiquement dans la zone la mieux désagrégée, qui oppose la plus faible résistance à leur avancement. Il en résulte une efficacité optimale pour l'arrachage.

Avantageusement, les doigts flexibles sont constitués par des tiges courbées ayant une convexité vers l'avant dans le sens de rotation de la roue lors du déplacement du véhicule.

Les tiges courbes peuvent être en acier, ou en toute matière plastique appropriée, à condition que ces doigts présentent une flexibilité suffisante, à la fois dans une direction radiale par rapport à l'axe de la roue, et dans une direction parallèle à cet axe.

Suivant un mode de réalisation simple, les roues sont montées libres sur leur axe, étant entraînées en rotation par le sol lors du déplacement du véhicule.

Suivant un mode de réalisation un peu plus compliqué, mais qui se révèle spécialement efficace dans le cas où il y a des risques de bourrage, au moins une des roues est entraînée en rotation à une vitesse telle que, dans sa partie en contact avec le sol sa vitesse par rapport au sol est à peu près nulle.

Dans ce cas, on observera que, si une roue est entraînée, l'autre roue est entraînée par la première sous l'effet de la présence des objets pris entre les doigts des deux roues.

Suivant une réalisation intéressante, il est prévu, entre les deux roues, à l'arrière et au-dessus de leur axe, un dispositif apte à éjecter les objets qui seraient retenus entre les doigts des roues, et à les transférer vers les moyens de nettoyage et d'acheminement.

Avantageusement, le dispositif de rejet est constitué par une roue verticale, tournant librement dans le plan de symétrie de l'ensemble des deux roues à doigts flexibles.

Le dispositif de rejet a pour effet de limiter les bourrages et les pertes d'objets, particulièrement dans le cas où la terre est collante.

Pour une bonne efficacité, il est préférable de prévoir que les socs ont, en vue de côté, une forme générale de triangle avec un bord d'attaque oblique descendant vers l'arrière sous un angle de 10 à 30 degrés et un bord de fuite montant vers l'arrière sous un angle d'au moins 40 degrés.

La forme particulière des socs qu'on vient de décrire a pour effet que ceux-ci sont particulièrement efficaces pour désagréger la terre, grâce à la faible pente de leur bord d'attaque, et ont un effet réduit pour pousser vers le haut des objets contenus dans la terre, grâce à leur bord de fuite à pente relativement forte. Les objets sont donc saisis et déplacés par le haut essentiellement par les deux disques à doigts flexibles, pénétrant dans la terre fortement désagrégée et déplaçant délicatement les objets vers le haut en les serrant entre eux.

L'invention va maintenant être décrite de façon plus détaillée à l'aide d'un exemple pratique d'appareil d'arrachage de betteraves, illustré avec les dessins, parmi lesquels :
Figure 1 est une vue de côté, en élévation de l'appareil,
Figure 2 est une vue en plan du même appareil et
Figure 3 est une vue prise de l'avant, des doigts flexibles, les socs et les moyens de soutien des disques étant supposés enlevés pour plus de clarté.

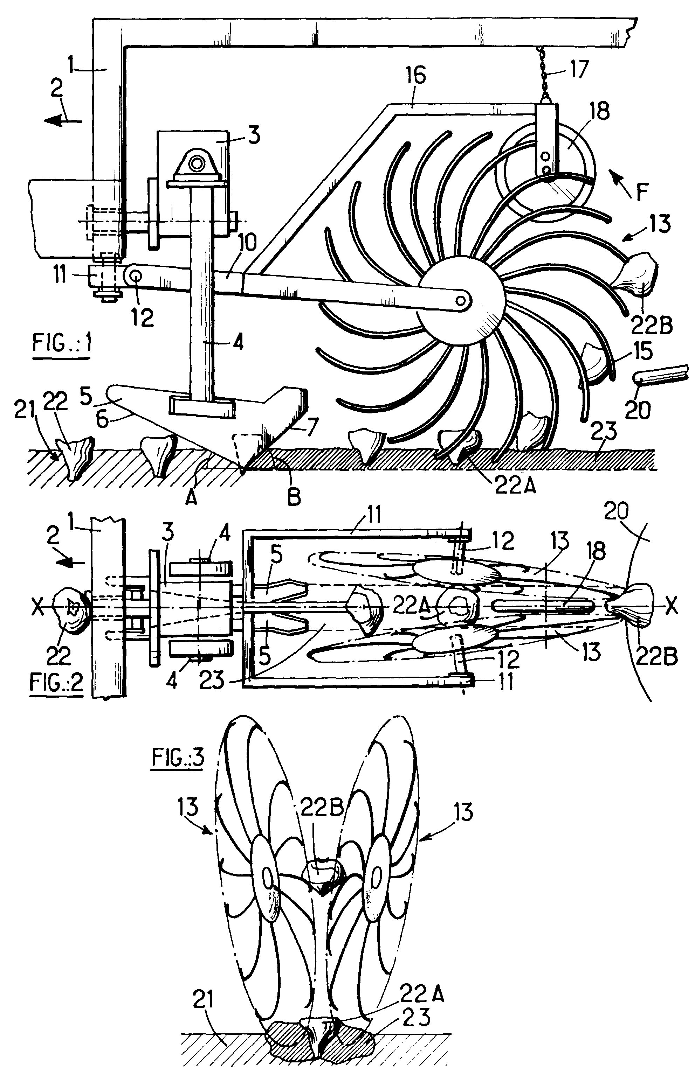

Les figures 1 et 2 montrent le dispositif d'arrachage porté par le châssis principal 1 d'un véhicule, non représenté dans son ensemble, qui se déplace normalement dans la direction indiquée par la flèche 2, vers la gauche sur les figures 1 et 2. Sur le châssis 1 est monté un ensemble d'entraînement à excentrique 3, qui porte deux bras verticaux 4, auxquels sont fixés des socs 5.

On a désigné par XX, à la figure 2, le plan de symétrie vertical de la paire de socs. Les bras 4 et les socs 5 sont disposés de façon symétrique par rapport à ce plan XX. Cependant, le dispositif à excentrique 3 est disposé de façon à introduire un décalage de phase dans les oscillations des deux socs 5. Plus précisément, les bras 4 et les socs 5 reçoivent, du dispositif 3, un mouvement selon lequel ils décrivent deux petits cercles dans un plan vertical, et quand l'un des socs 5 est dans la partie ascendante de sa course, l'autre soc est dans sa partie descendante.

Comme le montre clairement la figure 1, chaque soc a la forme générale d'un triangle, ayant un côté à peu près horizontal, un côté formant bord d'attaque 6, qui descend vers l'arrière, défini par le sens de déplacement de la flèche 2, l'inclinaison A étant de l'ordre de 20 degrés. Le troisième côté 7 du triangle formé par le soc est un bord de fuite qui fait avec l'horizontale un angle B d'environ 40 degrés.

Un système de bielles formant parallélogramme articulé, non représenté, assure le maintien du bras 4 en direction verticale, et assure par conséquent la constance des angles A et B.

Un bras-support 10 est monté sur le châssis principal 1 par l'intermédiaire d'un ensemble de deux articulations 11 et 12, la première à axe vertical et la deuxième à axe horizontal perpendiculaire à la direction du mouvement. Cet ensemble d'articulations pourrait être remplacé par une rotule. L'extrémité du bras 10 opposé à ces deux articulations forme une fourche disposée symétriquement par rapport à un plan dont la position moyenne est confondue avec le plan XX, mais qui peut se déplacer par rapport à celui-ci par pivotement autour de l'articulation 11. Les deux bras de la fourche portent chacun l'essieu d'une roue d'arrachage 13. Les roues 13 sont dans une disposition "traînée" qui résulte du fait que le bras-support 10 est sensiblement horizontal, et relié au châssis principal par les articulations 11, 12 situées en avant des roues 13.

Les roues d'arrachage comprennent chacune un moyeu 14, qui porte des doigts flexibles 15, formés, dans l'exemple décrit, d'une tige flexible en acier, à concavité tournée vers l'avant dans la partie basse de la roue, c'est-à-dire à l'opposé de la rotation de la roue elle-même, symbolisée par la flèche F, quand le véhicule se déplace sur le sol, et que la roue, montée libre, est entraînée en déplacement par le contact du sol.

Comme on peut le voir sur les figures 2 et 3, le plan des roues 13 forme, avec le plan vertical de symétrie de la fourche, et avec la verticale, un angle de l'ordre de 8 degrés.

Un bras de suspension 16 est relié par une chaîne 17 au châssis principal 1 du véhicule, de façon à empêcher un déplacement vers le bas trop important des roues 13, soit lorsqu'elles tombent dans un trou, soit lorsque, pour un déplacement sur route, le châssis principal 1 est relevé par rapport au sol. Une roue d'éjection 18 est portée par le bras 16, et disposée entre les deux roues d'arrachage 13. On comprend que son effet est de projeter vers l'arrière les betteraves qui auraient pu se trouver bloquer entre deux doigts d'arrachage 15. On a représenté de façon schématique en 20 l'extrémité d'un dispositif de transfert des betteraves vers l'arrière, afin de les envoyer dans une trémie ou une benne, ou de les disposer en andains.

Le fonctionnement de l'appareil se comprend aisément : les socs 5, animés de mouvements oscillatoires, pénètrent dans le sol 21 de part et d'autre des betteraves cultivées en lignes 22, et créent dans celui-ci une sorte de sillon, c'est-à-dire une bande 23 de terre ameublie sous l'effet des mouvements oscillatoires des socs. Le sillon 23 contient les betteraves 22, qui n'ont pratiquement pas été soulevées au-dessus du sol.

Les roues 13 pénètrent dans la terre ameublie du sillon 23 sous l'effet de leur poids, auquel s'ajoute celui du bras 10. Un vérin auxiliaire, non représenté, peut aider à cet enfoncement. La disposition "traînée" des roues fait que leur partie inférieure n'a pas tendance à quitter le sillon. La position relative des roues 13 est telle que leurs périphéries se rapprochent l'une de l'autre pour enserrer les betteraves. Les roues 13 continuant de tourner, les doigts 15, qui enserrent des betteraves, s'élèvent vers l'arrière, puis les parties périphériques des roues avec les doigts 15, s'écartent l'une de l'autre libérant les betteraves 22 qui tombent sur le dispositif de transfert 20.

Les figures montrent une betterave 22A au moment où elle est saisie par les doigts 15, et une betterave 22B qui vient d'être libérée par les doigts.

La roue de rejet 18 n'intervient qu'au cas où une betterave ne se serait pas dégagée suffisamment de l'intervalle entre les roues 13.

## Revendications

1. Appareil d'arrachage d'objets tels que betteraves ou similaires, destiné à être monté sur un véhicule capable de se déplacer sur le sol, cet appareil comprenant :
- une paire de socs (5) conçus pour s'enfoncer dans le sol au-dessous du niveau de la partie inférieure des objets à arracher, disposés symétriquement par rapport à un plan de symétrie vertical (XX) parallèle à la direction de déplacement du véhicule, les socs étant formés chacun d'une lame rigide, convergeant l'un vers l'autre à leur partie inférieure,
- des moyens (3) pour animer les socs d'un mouvement vibratoire en même temps que le véhicule se déplace, de façon à créer entre eux une bande de terre désagrégée et contenant les objets à arracher (22),
- et des moyens pour soulever les objets à arracher contenus dans la bande de terre désagrégée et pour les transférer sur des moyens de nettoyage et d'acheminement vers un andain ou vers une trémie, ces moyens comprenant une paire de roues (13) formées chacune d'un moyeu central (14) et de doigts (15) montés sur le moyeu et s'étendant radialement vers l'extérieur à partir du moyeu dans un plan moyen perpendiculaire à l'axe de la roue, ces doigts étant flexibles élastiquement dans une direction perpendiculaire audit plan moyen,
les roues de la paire étant disposées symétriquement par rapport à un plan de symétrie vertical dont la position moyenne est confondue avec celle du plan de symétrie de la paire de socs,
caractérisé en ce que les plans moyens des doigts de chaque roue sont disposés obliquement par rapport au plan de symétrie de la paire de roues, et par rapport à la verticale, de telle façon que les 5 périphéries des deux roues de la paire présentent un point d'écartement minimal situé vers le bas et vers l'arrière dans le sens de déplacement du véhicule, par rapport aux centres des roues,
l'écartement minimal entre les périphéries des roues étant tel qu'au point d'écartement minimal les objets à arracher peuvent être maintenus élastiquement entre les doigts flexibles sans être endommagés,
l'écartement maximal entre les périphéries des roues étant tel que les objets à arracher ne peuvent pas être maintenus par les doigts flexibles,
l'écartement entre les points les plus bas des périphéries des roues présentant un écartement juste suffisant pour permettre le maintien élastique des objets à arracher, ou d'une partie importante de ces objets, entre les doigts flexibles,
la position en hauteur des roues étant calculée pour que leur partie inférieure pénètre dans la bande de terre désagrégée par les socs jusqu'à une profondeur suffisante pour permettre aux doigts flexibles (15) de saisir les objets à arracher (22),
et les roues étant entraînées en rotation, lors du déplacement du véhicule, de telle façon que la partie inférieure de la périphérie des roues est à peu près immobile, dans la direction du déplacement du véhicule, par rapport au sol.

2. Appareil selon la revendication 1, caractérisé en ce que les plans moyens des doigts (15) font avec la verticale un angle de 5 à 20 degrés, et, avec le plan de symétrie de la paire de roues (13), un angle de 5 à 20 degrés.

3. Appareil selon la revendication 1 ou 2, caractérisé en ce que la paire de roues (13) à doigts flexibles est portée par un équipage qui assure le maintien de leur position relative mais permet de légers déplacements de l'ensemble de la paire de roues dans une direction verticale et dans une direction horizontale.

4. Appareil selon la revendication 3, caractérisé en ce que l'équipage portant les deux roues (13) à doigts flexibles est constitué comme une fourche reliée au véhicule par une liaison articulée placée en avant desdites roues dans le sens du déplacement.

5. Appareil selon l'une des revendications 1 à 4, caractérisé en ce que les doigts flexibles (15) sont constitués par des tiges courbées ayant une convexité vers l'avant dans le sens de rotation de la roue lors du déplacement du véhicule.

6. Appareil selon l'une des revendications 1 à 5, caractérisé en ce que les roues (13) sont montées libres sur leur axe, étant entraînées en rotation par le sol lors du déplacement du véhicule.

7. Appareil selon l'une des revendications 1 à 5, caractérisé en ce qu'au moins une des roues (13) est entraînée en rotation à une vitesse telle que, dans sa partie en contact avec le sol sa vitesse par rapport au sol est à peu près nulle.

8. Appareil selon l'une des revendications 1 à 5, caractérisé en ce qu'il est prévu, entre les deux roues, à l'arrière et au-dessus de leur axe, un dispositif (18) apte à éjecter les objets qui seraient retenus entre les doigts des roues, et à les transférer vers des moyens de nettoyage et de transfert (20).

9. Appareil selon la revendication 8, caractérisé en ce que le dispositif de rejet est constitué par une roue verticale (18), tournant librement dans le plan de symétrie de la paire de roues (13).

10. Appareil selon l'une des revendications 1 à 7, caractérisé en ce que les socs (5) ont, en vue de côté, une forme générale de triangle avec un bord d'attaque (6) oblique descendant vers l'arrière sous un angle de 10 à 30 degrés et un bord de fuite (7) montant vers l'arrière sous un angle d'au moins 40 degrés.
